# DEMANDE DE BREVET EUROPEEN

(11) **EP 4 844 081 A1**
(43) Date de publication de la demande: **25.11.2026**
(21) Numéro de dépôt: 26180375.3
(22) Date de dépôt: 21.05.2026
(51) Int. Cl.: C22B 26/12, C01D 15/08, C02F 1/52, C02F 1/66, C02F 9/00

(54) **PROCEDE ABATTEMENT DU LITHIUM**

(30) Priorité: 21.05.2025 BE 202505321
(71) Demandeur: Hydrometal, 4480 Engis (BE)
(72) Inventeur: MARENNE, Amélie, 4480 ENGIS (BE)
(74) Mandataire: Gevers Patents

(57) **Abrégé**

La présente invention concerne un procédé d'abattement du lithium compris dans au moins un flux aqueux provenant d'au moins un procédé hydrométallurgique. Ledit procédé d'abattement comprend : une fourniture d'un flux aqueux comprenant du lithium ; un ajout d'un composé AI, de manière à obtenir une composition (I) ayant un rapport molaire Al/Li donné ; une modification du pH à 7,0 - 9,5 pour obtenir une composition comprenant un précipité comprenant du Li et du Al et une solution aqueuse ; une séparation dudit précipité de ladite solution aqueuse.

## Description

### DOMAINE DE L'INVENTION

La présente invention se trouve dans le domaine général de l'abattement du lithium dans des flux dérivés de procédés industriels, en particulier de procédés hydrométallurgiques.

### ETAT DE L'ART

Le Lithium (Li) est un élément important notamment dans les batteries lithium-ion (LIB) dont la production depuis les années 1990 n'a eu de cesse d'augmenter. En parallèle de ce succès, la production de déchets dérivés des LIB a aussi augmenté et pourrait atteindre 11 millions de tonnes en 2030 (M. Jacoby, "It's time to recycle lithium-ion batteries," CEN Global Enterprise, 2019. doi : 10.1021/CEN-09728-COVER). L'expansion de ces déchets dérivés des LIB entraine naturellement une demande de recyclage. Par ailleurs en raison de mauvais tri, la probabilité de retrouver du lithium dans toute une série d'autres déchets et coproduits ne cesse également de croître. Étant donné la solubilité élevée des différents sels de lithium, si le traitement de ces flux se réalise, ne serait-ce qu'en partie, par voie aqueuse, il est fort probable que le procédé génère un effluent aqueux contenant du lithium.

En conséquence, il existe un besoin de diminuer la concentration de lithium rejeté par l'industrie en général. Des procédés pour diminuer les quantités de lithium dans les effluents industriels, sont connus dans l'état de la technique.

Afin de réduire la concentration en lithium dans les effluents, ces derniers peuvent être purifiés par exemple par : extraction par solvant (L. Zhang, L. Li, H. Rui, D. Shi, X. Peng, L. Ji, X. Song, « Lithium recovery from effluent of spent lithium battery recycling process using solvent extraction », Journal of Hazardous Materials, Volume 398, 2020, 122840, ISSN 0304-3894), électrochimie (« Y. Jang, C.-H. Hou, S. Park, K. Kwon, E. Chung, « Direct electrochemical lithium recovery from acidic lithium-ion battery leachate using intercalation electrodes », Resources, Conservation and Recycling, Volume 175, 2021, 105837, ISSN 0921-3449 »), passage sur résine échangeuse d'ions. Une alternative encore consiste à ne plus générer d'effluent liquide en évaporant l'humidité comprise dans l'effluent et récupérer des cristaux solides.

Les techniques citées ci-avant sont souvent complexes à mettre en œuvre industriellement, et ne permettent pas toujours d'atteindre des valeurs très basses en lithium, ou encore ne sont pas toujours efficace énergétiquement. En conséquence, il existe un besoin continu de développer des procédés alternatifs, simples et efficaces énergétiquement, et permettant de diminuer la concentration en lithium dans les effluents industriels.

### RESUME DE L'INVENTION

Les inventeurs ont trouvé de que la présente invention répond aux problèmes exposés ci-avant de manière surprenante.

La présente invention concerne un procédé d'abattement du lithium compris dans au moins un flux aqueux dérivé d'au moins un procédé industriel, ledit procédé d'abattement comprenant au moins les étapes suivantes :
(i). fourniture d'au moins un flux aqueux provenant d'au moins un procédé hydrométallurgique [ci-après, « flux »] ; ledit flux comprenant au moins 3,1 mg/L et au plus 3000,0 mg/L de lithium ; ledit flux comprenant en outre :
   - au moins 1,0 g/L d'atomes de phosphore ; et/ou
   - au moins 3,0 g/L de carbonate ; et/ou
   - au moins 0,5 g/L de matière solide ;
(ii). optionnellement ajustement du pH dudit flux de manière que ledit flux ait un pH d'au moins 7,0 et d'au plus 9,5 ;
(iii). ajouter au moins un composé à base d'aluminium [ci-après, « composé AI »] audit flux, de manière à obtenir une composition (I) ;
   ladite composition (I) ayant en outre :
   - soit un rapport molaire Al/Li d'au moins 2,05 à la condition que ledit flux fourni à l'étape (i) comprenne :
      o moins de 1,0 g/L d'atomes de phosphore ; et
      o moins de 0,5 g/L de matière solide ;
   - ou un rapport molaire Al/Li d'au moins 3,00 à la condition que ledit flux fourni à l'étape (i) comprenne :
      o au moins 1,0 g/L d'atomes de phosphore ; et
      o moins de 0,5 g/L de matière solide ;
   - ou un rapport molaire Al/Li d'au moins 5,00 à la condition que ledit flux fourni à l'étape (i) comprenne au moins de 0,5 g/L de matière solide ;
(iv). augmenter ou diminuer le pH de ladite composition (I) obtenue à l'étape (iii) de manière à obtenir une composition (II) ayant un pH d'au moins 7,0 et d'au plus 9,5 ; ladite composition (II) comprenant une solution aqueuse et un précipité ; ledit précipité comprenant du lithium et de l'aluminium ;
(v). séparation dudit précipité d'au moins une partie de ladite solution aqueuse de ladite composition (II) obtenue à l'étape (iv).

En particulier, les inventeurs ont trouvé que la combination des étapes énoncées ci-avant permettaient d'obtenir une solution aqueuse ayant une concentration en lithium et en aluminium très faible. En outre, le procédé selon la présente invention présente les avantages suivants :
- le procédé selon la présente invention a nécessité un nombre d'étape très limité dont au moins les étapes (i) à (iv) peuvent être réalisées dans le même récipient de réaction (sans que cela soit obligatoirement le cas), ce qui permet une industrialisation aisée ;
- les flux pouvant être utilisés peuvent provenir de procédés très différents et avoir des compositions très différentes. De plus, ledit procédé selon l'invention peut être réalisé en batch ou en continu, ce qui rend le procédé très versatile ;
- le procédé selon la présente invention ne nécessite pas obligatoirement de chauffage, ce qui rend le procédé très efficace d'un point de vue énergétique. Bien entendu, cela n'implique pas que le présent procédé exclut nécessairement un chauffage durant ledit procédé ;
- ledit procédé selon la présente invention permet d'obtenir un abattement du lithium conséquent dans des temps de réaction courts. Cependant, des temps de réaction plus longs ne sont pas obligatoirement exclus et peuvent aussi être utilisés si besoin.

### DESCRIPTION DETAILLEE

Dans le contexte de la présente invention, le terme « comprenant » ne doit pas être interprété comme excluant des caractéristiques ou des éléments autres que ceux explicitement mentionnés. Il doit être interprété comme spécifiant la présence des caractéristiques ou éléments indiqués, mais n'excluant pas la présence ou l'ajout d'une ou plusieurs autres caractéristiques ou éléments. Ainsi, la portée de l'expression « une méthode comprenant les étapes A et B » ne doit pas être limitée aux méthodes constituées uniquement des étapes A et B. De même, une composition comprenant les composants A et B ne doit pas être limitée aux compositions constituées uniquement des composants A et B. En conséquence, les termes « comprenant » et « incluant » englobent les termes plus restrictifs « consistant essentiellement en » et « constitué de ».

Dans le contexte de la présente invention, si un élément ou un composant est dit choisi dans une liste d'éléments ou de composants cités, il faut comprendre que l'élément ou le composant peut également être l'un quelconque des éléments ou composants individuels cités dans ladite liste, ou peut également être choisi dans un groupe constitué de deux ou plusieurs des éléments ou composants explicitement cités.

Dans le présent document, sauf indication contraire, tous les pourcentages (%) et toutes les concentrations en ppm sont respectivement des pourcentages en poids (= % en poids) et des ppm en poids (= ppm).

L'utilisation de chiffres romains tels que (i), (ii), (iii) pour désigner les étapes d'un procédé ne confère pas nécessairement un ordre à ces étapes, sauf indication contraire. Si l'une des étapes est facultative, cela signifie qu'elle peut parfois être omise. Par exemple, si l'étape (ii) est facultative ou optionnelle, l'homme du métier comprend que cette étape peut être réalisée ou non. De plus, il est possible que chaque étape puisse comprendre d'autres étapes ou sous-étapes. Le procédé selon l'invention peut aussi comprendre d'autres étapes non-mentionnées entre chacune des étapes mentionnées explicitement.

Les termes « un », et « une » englobent respectivement les termes « au moins un », « au moins une ». De même, si les termes « ledit » et « ladite » englobent respectivement les termes : « ledit au moins un » et « ladite au moins une ». Les termes « du » et « dudit » englobent aussi « du au moins un(e) » et « dudit au moins un(e) ».

La présente invention concerne un procédé d'abattement du lithium compris dans au moins un flux aqueux dérivé d'au moins un procédé industriel.

Au sens de la présente invention, le terme « abattement du lithium » couvre la réduction et l'enlèvement du lithium dans un flux aqueux. En d'autres mots, la concentration en lithium du flux rentrant dans ledit procédé selon la présente invention est plus élevée que la concentration en lithium que ladite solution aqueuse obtenue par ledit procédé.

### Flux aqueux

Le procédé selon la présente invention comprend une étape (i) de fourniture d'au moins un flux aqueux dérivé d'au moins un procédé industriel.

Le terme « flux aqueux dérivé d'au moins un procédé industriel » peut inclure n'importe quel flux aqueux ou effluent provenant ou dérivé directement ou indirectement d'un procédé industriel. Le terme « effluent » peut désigner un flux ou déchet industriel (tels que par exemple déchets industriels liquides ou eaux usées) destiné à être éliminé, traité et/ou relargué dans l'environnement. En particulier un effluent peut comprendre des impuretés, et polluants, de la matière solide organique et/ou inorganique.

Ledit procédé industriel peut être un procédé hydrométallurgique ou un procédé de traitement des eaux usées. De préférence, ledit flux aqueux est un flux aqueux dérivé d'un procédé hydrométallurgique ou un procédé de traitement des eaux usées.

Le terme « flux aqueux » indique que ledit flux comprend de l'eau. Ledit flux peut être sous la forme d'une solution aqueuse, une pâte, une boue, une dispersion ou d'une suspension aqueuse.

Le terme « dérivé » ne signifie pas uniquement que ledit flux aqueux provient directement d'un procédé industriel sans avoir subi au moins un autre traitement au préalable, mais cela peut être le cas. En d'autres mots, le terme « dérivé » couvre les termes « dérivé directement » et « dérivé indirectement ». Des « flux aqueux dérivés directement d'au moins un procédé industriel » sont des flux qui n'ont pas subi de traitement additionnel avant d'être utilisés dans le procédé selon la présente invention. Tandis que des « flux aqueux dérivés directement d'au moins un procédé industriel » sont des flux qui ont subi au moins un traitement (par exemple chimique, ou autre) avant d'être utilisés dans le procédé selon la présente invention.

Au sens de la présente invention, un flux aqueux dérivé d'un procédé industriel ne couvre pas les solutions aqueuses issues directement de source(s) d'origine naturelle n'ayant pas été traité dans un procédé industriel comme : les saumures et les solutions aqueuses issues de sources géothermales. Cependant, un flux aqueux dérivé d'un procédé industriel au sens de la présente invention couvre aussi des solutions aqueuse issues de procédés industriels dans lesquels des matières premières mises en œuvre peuvent être d'origine naturelle.

Au sens de la présente invention, le terme « procédé hydrométallurgique » désigne un procédé industriel faisant appel à des techniques de séparation des métaux (ou des métaux et des impuretés) par voie humide. Les opérations chimiques unitaires impliquées dans ce processus comprennent, sans s'y limiter, la lixiviation, le lavage, la précipitation, l'extraction par solvant, l'extraction par résine échangeuse d'ions et l'électro-affinage. Des exemples de procédés hydrométallurgiques au sens de la présente invention incluent mais ne se limitent pas à des :
- procédés de recyclage hydrométallurgique de matériaux dérivés de batteries ;
- procédés de traitement d'eau usées et/ou de boues de préférence dans des stations d'épurations ;
- procédés de traitement des eaux de lavage des gaz des incinérateurs ;
- procédés de traitement de matériaux issus de volatisation (fuming) de métaux, de préférence du zinc, du plomb, du cuivre ou encore des batteries Li-ion.

Le terme « traitement » utilisé ci-avant peut comprendre une lixiviation en milieux basique ou neutre ou acide de sels ou/et de métaux.

Deux exemples non-limitatifs pour illustrer cette définition à partir d'un oxyde de zinc obtenu par volatilisation (fuming) du zinc lors du traitement de ferrailles :
1. Un oxide de zinc contient généralement des halogènes qui empêchent sa valorisation dans les électrolyses de zinc (formation de Cl₂ à l'anode). Dès lors, un lavage chimique de ces halogènes est réalisé en milieu basique préalablement à la valorisation de l'oxyde de zinc.
2. Un oxide de zinc est lixivié avec de l'acide sulfurique en vue de produire un sulfate de zinc. Le sulfate de zinc est précipité en oxyde de zinc avec une base.

Dans les deux cas de figure, en raison d'un mauvais tri des ferrailles, des batteries au lithium peuvent se retrouver dans le mélange de ferrailles qui entrent dans le four. Lors de la volatilisation du zinc, une proportion du lithium plus ou moins importante en fonction de la température et des autres éléments présent est également volatilisée. L'oxyde de zinc ainsi obtenu contiendra dès lors également une fraction de sel de lithium. De ce fait, une partie importante du Li contenu dans la matière lixiviée passe en solution et doit être éliminée en vue de pouvoir rejeter l'effluent dans l'environnement.

Les procédés de recyclage hydrométallurgique de matériaux dérivés de batteries peuvent par exemple comprendre au moins une étape sélectionnée parmi les étapes suivantes :
- génération par voie mécanique et/ou thermique d'un flux de matière sèche issu de la chaine de valeur des batteries Lithium-ion. Ledit flux de matière sèche peut être une black mass, un coproduit du recyclage pyrométallurgique des batteries, un coproduit de la production de batteries, ...
- lixiviation sélective ou non du lithium contenu dans ledit flux de matière sèche de manière à obtenir un lixiviat ; ledit lixiviat comprenant au moins le lithium sous forme de cations.
- une précipitation du Li compris dans ledit lixiviat, de préférence une précipitation du Li sous forme de Li₃PO₄ et/ou de Li₂CO₃, et récupération d'un filtrat.

Ce type de procédé peut comprendre d'autres étapes comme des extractions par solvent organique ou des précipitations sélectives de certains métaux.

Ladite précipitation du Li peut comprendre au moins une étape d'ajout de Na₃PO₄ audit lixiviat. Alternativement, ladite précipitation du Li peut comprendre au moins une étape d'ajout de H₃PO₄ et une étape d'ajout d'une base, comme par exemple NaOH, KOH, audit lixiviat. L'ajout de ladite base peut être faite avant, pendant ou après l'ajout de H₃PO₄ audit lixiviat.

Ladite précipitation du Li peut comprendre au moins une étape d'ajout de Na₂CO₃ audit lixiviat. Alternativement, ladite précipitation du Li peut comprendre une étape d'addition de CO₂ et une étape d'ajout d'une base comme par exemple NaOH, KOH, audit lixiviat. L'ajout de ladite base peut être faite avant, pendant ou après l'ajout de CO₂ audit lixiviat.

Une méthode de précipitation du Li sous forme de Li₃PO₄ pouvant être utilisée est divulguée dans Shin, Joo, et al. "Precipitation of lithium phosphate from lithium solution by using sodium phosphate" The Canadian Journal of Chemical Engineering (2022) ».

Ledit filtrat obtenu après précipitation peut aussi être considéré comme un flux aqueux comme défini ci-avant.

Ledit flux aqueux dérivés d'au moins un procédé hydrométallurgique peut être dérivé directement ou indirectement dudit filtrat. Le terme « dérivé », couvrant « dérivé directement » et « dérivé indirectement ». Dans le cas où ledit flux est dérivé directement dudit filtrat, ledit filtrat est ledit flux aqueux dérivés d'au moins un procédé hydrométallurgique. Dans le cas où ledit flux est dérivé indirectement dudit filtrat, ledit filtrat peut avoir subi au moins un autre traitement (chimique ou autre) avant de devenir ledit flux.

Ledit flux selon la présente invention comprend au moins 3,1 mg/L et au plus 3000,0 mg/L de lithium.

Ledit flux peut comprendre au moins 3,5 mg/L, ou au moins 4,0 mg/L, ou au moins 4,5 mg/L, ou au moins 5,0 mg/L de lithium. Ledit flux peut comprendre au plus 2500,0 mg/L, ou au plus 2000,0 mg/L, ou au plus 1500,0 mg/L, ou au plus 1000,0 mg/L de lithium. Si désiré, ledit flux comprend au moins 3,5 mg/L et au plus 2500,0 mg/L, ou au moins 4,0 mg/L et au plus 2000,0 mg/L, ou au moins 4,5 mg/L et au plus 1500,0 mg/L de lithium.

Au sens de la présente invention, lesdites quantités de lithium mentionnées en mg/L sont mesurées par spectrométrie ICP-OES de l'anglais : « Inductively Coupled Plasma Optical Emission Spectroscopy ».

Selon la présente invention, ledit flux comprenant en outre :
- au moins 1,0 g/L d'atomes de phosphore, et/ou
- au moins 3,0 g/L de carbonate, et/ou
- au moins 0,5 g/L de matière solide.

De préférence, ledit flux comprend au moins 2,0 g/L, plus préférentiellement encore au moins 3,0 g/L d'atomes de phosphore. De préférence, ledit flux comprend au plus 10,0 g/L, plus préférentiellement au plus 8,0 g/L, plus préférentiellement encore au plus 6,0 g/L d'atomes de phosphore. De préférence, ledit flux comprend au moins 1,0 g/L et au plus 10,0 g/L, plus préférentiellement au moins 2,0 g/L et au plus 8,0 g/L, plus préférentiellement encore au moins 3,0 g/L et au plus 6,0 g/L d'atomes de phosphore.

Au sens de la présente invention, lesdites quantités d'atomes de phosphore mentionnées en g/L peuvent être mesurées par spectrométrie ICP-OES de l'anglais : « Inductively Coupled Plasma Optical Emission Spectroscopy ». Les atomes de phosphore peuvent provenir par exemple de phosphates et/ou d'autres composés phosphorés compris dans ledit flux aqueux.

De préférence, ledit flux comprend au moins 3,0 g/L, plus préférentiellement au moins 5,0 g/L, plus préférentiellement au moins 10,0 g/L de carbonate. De préférence, ledit flux comprend au plus 160,0 g/L, plus préférentiellement au plus 140,0 g/L, plus préférentiellement encore au plus 120,0 g/L de carbonate. De préférence, ledit flux comprend au moins 3,0 g/L et au plus 160,0 g/L, plus préférentiellement au moins 5,0 g/L et au plus 140,0 g/L, plus préférentiellement encore au moins 10,0 g/L et au plus 120,0 g/L de carbonate ;

Lesdites quantités de carbonate mentionnées dans le présent document peuvent être mesurées en équivalent CO₃ et mesurées soit par titrage colorimétrique, soit par un analyseur carbone UV-persulfate, de préférence avec un analyseur Analytik Jena multi N/C UV HS.

De préférence, ledit flux comprend au moins 0,5 g/L, ou au moins 1,0 g/L, ou au moins 5,0 g/L ou au moins 10,0 g/L, ou au moins 25,0 g/L de matière solide. De préférence, ledit flux comprend au plus 400,0 g/L, ou au plus 300,0 g/L, ou au plus 200,0 g/L de matière solide. De préférence, ledit flux comprend au moins 0,5 g/L et au plus 400,0 g/L, ou au moins 1,0 g/L et au plus 300,0 g/L, ou encore au moins 5,0 g/L et au plus 200,0 g/L de matière solide.

De préférence, ledit flux a un pH d'au moins 9,0 ou d'au moins 9,5, ou d'au moins 10,5. De préférence, ce flux a un pH d'au plus 14,0 ou d'au plus 13,0 ou d'au plus 12,0. De préférence, ledit flux a un pH d'au moins 9,6 et d'au plus 14,0 ou d'au moins 10,5 et d'au plus 13,0 ou d'au moins 11,5 et d'au plus 12,0.

Au sens de la présente invention, toutes les valeurs de pH peuvent être déterminées à l'aide d'un pH-mètre. De préférence, toutes les valeurs de pH sont mesurées à une température de 20°C.

De préférence, ledit flux a un pH d'au moins 9,6, plus préférentiellement d'au moins 10,5, encore plus préférentiellement d'au moins 11,5. De préférence, ledit flux a un pH d'au plus 14,0 plus préférentiellement d'au plus 13,0 plus préférentiellement encore d'au plus 12,5. De préférence, ledit flux a un pH d'au moins 9,6 et d'au plus 14,0, plus préférentiellement d'au moins 10,5 et d'au plus 13,0 plus préférentiellement encore d'au moins 11,5 et d'au plus 12,5.

Optionnellement, le procédé selon la présente invention comprend une étape (ii) d'ajustement du pH dudit flux de manière que ledit flux ait un pH d'au moins 7,0 et d'au plus 9,5.

L'étape (ii) peut comprendre au moins un ajout d'une composition comprenant au moins un acide (ci-après, composition Ac) ou d'une composition comprenant au moins une base (ci-après, composition B) audit flux obtenu à l'étape (i), avec la condition que ledit flux obtenu à l'étape (ii) obtienne un pH tel que spécifié ci-avant ou ci-après. Ladite composition Ac et ladite composition B peut respectivement comprendre au moins un acide ou une base au sens de Lewis ou de Bronsted. De préférence, ledit acide est choisi dans le groupe constitué de H₂SO₄, HCl, H₃PO₄, HNO₃ et leurs mélanges. De préférence ladite base est choisie dans le groupe constitué de NaOH, KOH, Na₂CO₃, NaHCO₃, CaO, Ca(OH)₂ et leurs mélanges.

De préférence, ladite composition Ac et ladite composition B peuvent avoir différentes origines. Par exemple, ladite composition Ac et ladite composition B peuvent provenir directement d'un procédé de fabrication d'acide ou de base ou peut provenir de procédé de recyclage de sous-produits de procédés industriels.

De préférence, ledit acide compris dans ladite composition Ac et ladite base comprise dans ladite composition B peuvent être au moins partiellement dissociés en particulier lorsque ladite composition Ac et ladite composition B comprennent de l'eau et/ou sont sous forme de solution aqueuse.

Des exemples non limitatifs de compositions Ac ou de compositions B peuvent comprendre respectivement des acides ou des bases provenant de procédés de recyclage de sous-produits de procédés industriels comprennent notamment les acides résiduels issus de traitements métallurgiques, les flux secondaires de l'industrie et des combinaisons de ceux-ci. A titre d'exemple, ladite composition Ac peut comprendre de l'HCl issu du lavage des gaz des incinérateurs traitant des déchets de PVC (poly chlorure de vinyl).

Ladite composition B peut être ajoutée sous forme solide ou sous forme de solution ou de suspension aqueuse. De préférence, ladite composition B est sous forme de solution aqueuse dans laquelle ladite base est au moins en partie ou en totalité dissoute, ou en suspension à raison d'au moins 10 g/L, de préférence au moins 50 g/L, plus préférentiellement au moins 100 g/L. Dans ce cas-ci « g/L » signifie g de base par litre de composition B.

De préférence, ladite composition Ac est ajoutée sous forme de solution, plus préférentiellement de solution aqueuse.

De préférence, ladite composition Ac comprend au moins 10 % en poids, plus préférentiellement au moins 15 % en poids, plus préférentiellement au moins 20 % en poids d'acide, par rapport au poids total de ladite composition Ac. De préférence, ladite composition Ac comprend au plus 98 % en poids, de préférence, au plus 90 % en poids, plus préférentiellement au plus 80 % en poids, plus préférentiellement au plus 70 % en poids, plus préférentiellement au plus 60 % en poids, plus préférentiellement au plus 50 % en poids, plus préférentiellement au plus 40 % en poids, plus préférentiellement au plus 30 % en poids, plus préférentiellement au plus 25 % en poids, plus préférentiellement au plus 20 % en poids, plus préférentiellement au plus 18% en poids d'acide par rapport au poids total de ladite composition Ac.

De préférence, ladite composition Ac comprend au moins 10% en poids et au plus 40 % en poids, plus préférentiellement au moins 10% en poids et au plus 25 % en poids, plus préférentiellement au moins 15 % en poids et au plus 20 % en poids d'acide par rapport au poids total de ladite composition Ac et de préférence ledit acide est H₂SO₄ ou HCl.

De préférence, ladite composition Ac comprend au moins 70 % en poids, plus préférentiellement au moins 75 % en poids, plus préférentiellement au moins 80 % en poids d'acide, par rapport au poids total de ladite composition Ac. De préférence, ladite composition Ac comprend au plus 98 % en poids, plus préférentiellement au plus 96 % en poids, plus préférentiellement au plus 90 % en poids, plus préférentiellement au plus 87% en poids d'acide par rapport au poids total de ladite composition Ac.

De préférence, ladite composition Ac comprend au moins 70 % en poids et au plus 98 % en poids, plus préférentiellement au moins 75 % en poids et au plus 98 % en poids, plus préférentiellement au moins 80 % en poids et au plus 98 % en poids d'acide par rapport au poids total de ladite composition Ac et de préférence ledit acide est H₂SO₄ ou H₃PO₄.

De préférence, ladite composition Ac comprend au moins 80 % en poids et au plus 90 % en poids, plus préférentiellement au moins 80 % en poids et au plus 87 % en poids d'acide par rapport au poids total de ladite composition Ac et de préférence ledit acide est H₃PO₄.

De préférence, ladite composition Ac comprend au moins 85 % en poids et au plus 98 % en poids, plus préférentiellement au moins 90 % en poids et au plus 96 % en poids d'acide par rapport au poids total de ladite composition Ac et de préférence ledit acide est H₂SO₄. De préférence, ledit acide ou ladite base est ajouté(e) en une seule fois. Alternativement, ledit acide ou ladite base peut être ajouté(e) en plusieurs fois et/ou de manière continue.

De préférence, dans l'étape (ii) le pH dudit flux est ajusté de manière à ce que ledit flux ait un pH d'au moins 7,5, encore plus préférentiellement d'au moins 8,0. De préférence, dans l'étape (ii) le pH dudit flux est ajusté de manière à ce que ledit flux ait un pH d'au plus 9,4, plus préférentiellement d'au plus 9,3, encore plus préférentiellement d'au plus 8,8. De préférence, dans l'étape (ii) le pH dudit flux est ajusté de manière à ce que ledit flux ait un pH d'au moins 7,5 et d'au plus 9,5, plus préférentiellement d'au moins 7,5 et d'au plus 9,3, plus préférentiellement encore d'au moins 8,0 et d'au plus 9,3, plus préférentiellement encore d'au moins 8,0 et d'au plus 8,8.

De préférence l'étape (ii) est réalisée directement après l'étape (i). Dans ce contexte, cela signifie que ledit flux obtenu à l'étape (i) ne subit pas d'autre étape de procédé ou d'autre traitement avant d'être utilisé dans ladite étape (ii).

De préférence ledit flux fourni à l'étape (i) et utilisé à l'étape (ii) peut avoir une température d'au moins 0°C, plus préférentiellement d'au moins 10°C, plus préférentiellement d'au moins 15°C, plus préférentiellement d'au moins 20 °C. De préférence ledit flux fourni à l'étape (i) et utilisé à l'étape (ii) peut avoir une température d'au plus 90°C, plus préférentiellement d'au plus 70°C, plus préférentiellement d'au plus 60 °C, plus préférentiellement d'au plus 50 °C, plus préférentiellement d'au plus 40 °C, plus préférentiellement d'au plus 30 °C. De préférence ledit flux fourni à l'étape (i) et utilisé à l'étape (ii) peut avoir une température d'au moins 10°C et au plus 90°C, plus préférentiellement d'au moins 15°C et au plus 80 °C, plus préférentiellement d'au moins 15 °C et au plus 70°C, plus préférentiellement d'au moins 15 °C et au plus 60°C, plus préférentiellement d'au moins 15 °C et au plus 50°C, plus préférentiellement d'au moins 15 °C et au plus 40°C.

### Etape (iii), composé à base d'aluminium et composition (I)

Dans l'étape (iii) du procédé selon la présente invention, au moins un composé à base d'aluminium [ci-après, « composé AI »] est ajouté avec ledit flux, de manière à obtenir une composition (I).

Ledit composé AI peut être sous la forme solide ou dissout en solution aqueuse. En d'autres mots, ledit composé Al peut être compris dans une composition. Ledit composé Al peut être pur ou provenir d'un matériau résiduaire issu de l'industrie chimique, du traitement des métaux. Selon la présente invention, le composé Al peut avoir différentes origines. Par exemple, le composé AI peut provenir directement d'un procédé de fabrication de composé AI ou peut provenir du recyclage de sous-produits de procédés industriels.

De préférence, ledit composé AI comprend, par rapport au poids total dudit composé AI, au moins 3 % en poids, plus préférentiellement au moins 5 % en poids, plus préférentiellement au moins 10 % en poids, plus préférentiellement encore au moins 15 % en poids d'atomes d'AI. De préférence, ledit composé Al comprend, par rapport au poids total dudit composé AI, au plus 50 % en poids, plus préférentiellement au plus 40 % en poids, plus préférentiellement encore au plus 30 % en poids d'atomes d'AI. De préférence, ledit composé AI comprend, par rapport au poids total dudit composé AI, au moins 3 % en poids et au plus 50 % en poids, plus préférentiellement au moins 5 % en poids et au plus 40 % en poids, plus préférentiellement encore au moins 10 % en poids et au plus 30 % en poids, plus préférentiellement au moins 15 % en poids et au plus 30 % en poids d'atomes d'AI.

De préférence, ledit composé Al comprend, par rapport au poids total dudit composé AI, au moins 3 % en poids, plus préférentiellement au moins 5 % en poids, plus préférentiellement encore au moins 10 % en poids, plus préférentiellement au moins 15 % en poids d'atomes d'AI. De préférence, ledit composé Al comprend, par rapport au poids total dudit composé AI, au plus 50 % en poids, plus préférentiellement au plus 45 % en poids, plus préférentiellement encore au plus 40 % en poids d'atomes d'AI. De préférence, ledit composé AI comprend, par rapport au poids total dudit composé AI, au moins 3 % en poids et au plus 50 % en poids, plus préférentiellement au moins 5 % en poids et au plus 45 % en poids, encore plus préférentiellement au moins 10 % en poids et au plus 40 % en poids, plus préférentiellement au moins 15 % en poids et au plus 40 % en poids d'atomes d'AI.

De préférence, ledit composé AI est choisi dans le groupe constitué par un sel alcalin d'aluminate, le sulfate d'aluminium, le chlorure d'aluminium, les polychlorures d'aluminium, les chlorure hydroxyde sulfate de polyaluminium, leurs hydrates, et leurs mélanges.

De préférence, le sel alcalin d'aluminate est de l'aluminate de sodium.

Comme ledit composé AI peut être compris dans une composition, le composé AI peut être mélangé avec d'autres composés ou non. Ledit composé AI peut être mélangé avec d'autres composés aux conditions que ces autres composés n'empêchent pas l'abattement du lithium. En d'autres mots, ledit composé AI peut être mélangé avec d'autres composés aux conditions qu'ils n'empêchent pas la formation dudit précipité à l'étape (iv). Ledit composé AI peut être sous forme au moins partiellement dissociée, en particulier lorsqu'il est ajouté en étant initialement compris dans une composition comprenant de l'eau ou sous forme de solution aqueuse.

Au sens de la présente invention, le fait que ledit composé AI soit ajouté ou mélangé audit flux, ne veut pas dire que d'autres composés ne peuvent pas être ajoutés/mélangés en même temps, avant, après ou en même temps que ledit composé AI. Ainsi, lors de l'ajout, ledit composé AI peut être mélangé ou non avec d'autres composés.

Selon la présente invention, ladite composition (I) a en outre :
- soit un rapport molaire Al/Li d'au moins 2,05 à la condition que ledit flux fourni à l'étape (i) comprenne :
   ∘ moins de 1,0 g/L d'atomes de phosphore, et
   ∘ moins de 0,5 g/L de matière solide ;
- ou un rapport molaire Al/Li d'au moins 3,00 à la condition que ledit flux fourni à l'étape (i) comprenne :
   ∘ au moins 1,0 g/L d'atomes de phosphore, et
   ∘ et moins de 0,5 g/L de matière solide ;
- ou un rapport molaire Al/Li d'au moins 5,00 à la condition que ledit flux fourni à l'étape (i) comprenne au moins de 0,5 g/L de matière solide.

Au sens de la présente invention, le terme « rapport molaire Al/Li » correspond à la valeur de la concentration molaire en atomes d'aluminium divisé par la valeur de la concentration molaire en atomes de lithium. Ce rapport molaire est calculé sur base de la quantité de lithium présent dans ledit flux fournir à l'étape (i) et la quantité dudit composé Al ajouté à l'étape (iii).

De préférence, ledit composé AI est ajouté(e) en une seule fois. Alternativement, ledit composé AI peut être ajouté(e) en plusieurs fois et/ou de manière continue.

De préférence, ladite composition (I) présente en outre : un rapport molaire Al/Li d'au moins 2,10, plus préférentiellement au moins 2,20, de manière plus préférentielle au moins 2,30, à condition que ledit flux fourni à l'étape (i) comprenne : moins de 1,0 g/L d'atomes de phosphore, et moins de 0,5 g/L de matière solide. De préférence, ladite composition (I) présente en outre : un rapport molaire Al/Li d'au plus 45,00, plus préférentiellement d'au plus 40,00, plus préférentiellement d'au plus 30,00, plus préférentiellement d'au plus 20,00, plus préférentiellement d'au plus 10,00, plus préférentiellement d'au plus 5,00 à condition que ledit flux fourni à l'étape (i) comprenne : moins de 1,0 g/L d'atomes de phosphore, et moins de 0,5 g/L de matière solide. De préférence, ladite composition (I) présente en outre : un rapport molaire Al/Li d'au moins 2,10 et d'au plus 45,00 de préférence au moins 2,10 et d'au plus 40,00 de manière plus préférentielle au moins 2,10 et d'au plus 30,00 de manière plus préférentielle au moins 2,10 et d'au plus 20,00 de manière plus préférentielle au moins 2,10 et d'au plus 10,00 de manière plus préférentielle au moins 2,10 et d'au plus 5,00 à condition que ledit flux fourni à l'étape (i) comprenne : moins de 1,0 g/L d'atomes de phosphore, et moins de 0,5 g/L de matière solide.

De préférence, ladite composition (I) présente en outre : un rapport molaire Al/Li d'au moins 3,50, préférentiellement d'au moins 4,00 à condition que ledit flux fourni à l'étape (i) comprenne : au moins 1,0 g/L d'atomes de phosphore, et moins de 0,5 g/L de matière solide. De préférence, ladite composition (I) présente en outre : un rapport molaire Al/Li d'au plus 45,00, préférentiellement d'au plus 40,00 à condition que ledit flux fourni à l'étape (i) comprenne : au moins 1,0 g/L d'atomes de phosphore, et moins de 0,5 g/L de matière solide. De préférence, ladite composition (I) présente en outre : un rapport molaire Al/Li d'au moins 3,50 et d'au plus 45,00, préférentiellement d'au moins 4,00 et d'au plus 40,00 à condition que ledit flux fourni à l'étape (i) comprenne : au moins 1,0 g/L d'atomes de phosphore, et moins de 0,5 g/L de matière solide.

De préférence, ladite composition (I) présente un rapport molaire Al/Li d'au moins 5,00, plus préférentiellement d'au moins 7,50, encore plus préférentiellement d'au moins 10,00, encore plus préférentiellement d'au moins 15,00 à condition que ledit flux fourni à l'étape (i) comprenne au moins 0,5 g/L de matière solide. De préférence, ladite composition (I) présente un rapport molaire Al/Li d'au plus 50,00, plus préférentiellement d'au plus 40,00, plus préférentiellement encore d'au plus 30,00, à condition que ledit flux fourni à l'étape (i) comprenne au moins 0,5 g/L de matière solide. De préférence, ladite composition (I) présente un rapport molaire Al/Li d'au moins 5,00 et d'au plus 50,00, plus préférentiellement d'au moins 7,50 et d'au plus 40,00, encore plus préférentiellement d'au moins 10,00 et d'au plus 30,00, encore plus préférentiellement d'au moins 15,00 et d'au plus 30,00 à condition que ledit flux fourni à l'étape (i) comprenne au moins 0,5 g/L de matière solide.

De préférence, ladite composition (I) présente un rapport molaire Al/Li d'au moins 5,00 et d'au plus 50,00, plus préférentiellement d'au moins 10,00 et d'au plus 45,00, plus préférentiellement encore d'au moins 15,00 et d'au plus 40,00 à condition que ledit flux fourni à l'étape (i) comprenne au moins 0,5 g/L de matière solide.

De préférence, ladite composition (I) a un pH d'au moins 9,5, ou d'au moins 11,0 ou d'au moins 12,0. De préférence, ladite composition (I) a un pH d'au plus 12,0 ou d'au plus 11,5, ou d'au plus 12,0. De préférence, ladite composition (I) a un pH d'au moins 10,0 et d'au plus 12,0 ou d'au moins 11,0 et d'au plus 12,0.

De préférence, ladite composition (I) a un pH d'au plus 7,0 ou d'au plus 6,0 ou d'au plus 5,0. De préférence, ladite composition (I) a un pH d'au moins 3,0 ou d'au moins 4,0 ou d'au moins 5,0. De préférence, ladite composition (I) a un pH d'au plus 7,0 et d'au moins 3,0 ou d'au plus 6,0 et d'au moins 4,0.

De préférence, l'étape (iii) est réalisée directement après l'étape (i). Dans ce contexte, cela signifie que ledit flux obtenu à l'étape (i) ne subit pas d'autre étape de procédé ou d'autre traitement avant d'être utilisé dans ladite étape (iii). Alternativement, l'étape (iii) est réalisée directement après l'étape (ii). Dans ce contexte, cela signifie que ledit flux obtenu à l'étape (ii) ne subit pas d'autre étape de procédé ou d'autre traitement avant d'être utilisé dans ladite étape (iii).

Alternativement d'autres étapes que les étapes (i) et (ii) peuvent être réalisées avant ladite étape (iii).

De préférence ledit flux utilisé durant au moins une partie ou la totalité de l'étape (iii) et/ou ladite composition (I) peut avoir une température d'au moins 10°C, plus préférentiellement d'au moins 15°C, plus préférentiellement d'au moins 20 °C. De préférence ledit flux utilisé durant au moins une partie ou la totalité de l'étape (iii) et/ou ladite composition (I) peut avoir une température d'au plus 90°C, plus préférentiellement d'au plus 70°C, plus préférentiellement d'au plus 60 °C, plus préférentiellement d'au plus 50 °C, plus préférentiellement d'au plus 40 °C, plus préférentiellement d'au plus 30 °C. De préférence ledit flux utilisé durant au moins une partie ou la totalité de l'étape (iii) et/ou ladite composition (I) peut avoir une température d'au moins 10°C et au plus 90°C, plus préférentiellement d'au moins 15°C et au plus 80 °C, plus préférentiellement d'au moins 15 °C et au plus 70°C, plus préférentiellement d'au moins 15 °C et au plus 60°C, plus préférentiellement d'au moins 15 °C et au plus 50°C, plus préférentiellement d'au moins 15 °C et au plus 40°C.

### Etape (iv) et la composition (II)

Ledit procédé selon la présente invention comprend une étape (iv) d'augmentation ou de diminution du pH de ladite composition (I) obtenue à l'étape (iii) pour obtenir une composition (II) ayant un pH d'au moins 7,0 et d'au plus 9,5. Ladite composition (II) comprend une solution aqueuse et au moins un précipité. Ledit précipité comprend au moins du lithium et de l'aluminium.

L'étape (iv) peut comprendre au moins un ajout d'une composition comprenant au moins un acide (ci-après, composition Ac) ou d'une composition comprenant au moins une base (ci-après, composition B) à ladite composition (I) obtenue à l'étape (iii), avec la condition que ladite composition (II) ait un pH tel que spécifié ci-avant ou ci-après.

Ladite composition Ac et ladite composition B peut respectivement comprendre au moins un acide ou une base au sens de Lewis ou de Bronsted. De préférence, ledit acide est choisi dans le groupe constitué de H₂SO₄, HCl, H₃PO₄, HNO₃ et leurs mélanges. De préférence ladite base est choisie dans le groupe constitué de NaOH, KOH, Na₂CO₃, NaHCO₃, CaO, Ca(OH)₂ et leurs mélanges.

De préférence, ladite composition Ac et ladite composition B peuvent avoir différentes origines. Par exemple, ladite composition Ac et ladite composition B peuvent provenir directement d'un procédé de fabrication d'acide ou de base ou peut provenir de procédé de recyclage de sous-produits de procédés industriels.

Des exemples non limitatifs de compositions Ac ou de compositions B peuvent comprendre respectivement des acides ou des bases provenant de procédés de recyclage de sous-produits de procédés industriels comprennent notamment les acides résiduels issus de traitements métallurgiques, les flux secondaires de l'industrie et des combinaisons de ceux-ci. A titre d'exemple, ladite composition Ac peut comprendre de l'HCl issu du lavage des gaz des incinérateurs traitant des déchets de PVC.

Ladite composition B peut être ajoutée sous forme solide ou sous forme de solution ou de suspension aqueuse. De préférence, ladite composition B est sous forme de solution aqueuse dans laquelle ladite base est au moins en partie ou en totalité dissociés, ou en suspension à raison d'au moins 10 g/L, de préférence au moins 50 g/L, plus préférentiellement au moins 100 g/L. Dans ce cas-ci « g/L » signifie g de base par litre de composition B.

De préférence, ladite composition Ac est ajoutée sous forme de solution, plus préférentiellement de solution aqueuse, dans laquelle ledit acide est au moins en partie dissocié.

De préférence, ladite composition Ac comprend au moins 10 % en poids, plus préférentiellement au moins 15 % en poids, plus préférentiellement au moins 20 % en poids d'acide, par rapport au poids total de ladite composition Ac. De préférence, ladite composition Ac comprend au plus 30 % en poids, plus préférentiellement au plus 25 % en poids, plus préférentiellement au plus 20 % en poids, plus préférentiellement au plus 18% en poids d'acide par rapport au poids total de ladite composition Ac.

De préférence, ladite composition Ac comprend au moins 10% en poids et au plus 30 % en poids, plus préférentiellement au moins 10% en poids et au plus 25 % en poids, plus préférentiellement au moins 15 % en poids et au plus 20 % en poids d'acide par rapport au poids total de ladite composition Ac et de préférence ledit acide est H₂SO₄ ou HCl.

De préférence, ladite composition Ac comprend au moins 70 % en poids, plus préférentiellement au moins 75 % en poids, de préférence au moins 80 % en poids d'acide, par rapport au poids total de ladite composition Ac. De préférence, ladite composition Ac comprend au plus 98 % en poids, plus préférentiellement au plus 96 % en poids, plus préférentiellement au plus 90 % en poids, plus préférentiellement au plus 87% en poids d'acide par rapport au poids total de ladite composition Ac.

De préférence, ladite composition Ac comprend au moins 70 % en poids et au plus 98 % en poids, plus préférentiellement au moins 75 % en poids et au plus 98 % en poids, plus préférentiellement au moins 80 % en poids et au plus 98 % en poids d'acide par rapport au poids total de ladite composition Ac et de préférence ledit acide est H₂SO₄ ou H₃PO₄.

De préférence, ladite composition Ac comprend au moins 80 % en poids et au plus 90 % en poids, plus préférentiellement au moins 80 % en poids et au plus 87 % en poids d'acide par rapport au poids total de ladite composition Ac et de préférence ledit acide est H₃PO₄.

De préférence, ladite composition Ac comprend au moins 85 % en poids et au plus 98 % en poids, plus préférentiellement au moins 90 % en poids et au plus 96 % en poids d'acide par rapport au poids total de ladite composition Ac et de préférence ledit acide est H₂SO₄. De préférence, le dit précipité comprend des oxydes et/ou des hydroxydes d'aluminium et/ou de lithium.

De préférence, ledit précipité de ladite composition (II) comprend au moins un composé choisi dans le groupe constitué de LiAlO₂, LiAl₂(OH)₇, Al₂O₃, Al(OH)₃, leurs hydrates et leurs mélanges. Ledit précipité peut aussi comprendre d'autres composés comme par exemples des oxydes et/ou hydroxydes et/ou carbonates et/ou phosphates et/ou sulfates et/ou sulfures et/ou chlorures d'autres métaux.

En fonction de la nature dudit flux aqueux de départ, d'autres impuretés/métaux peuvent aussi précipiter après l'ajout du composé AI.

De préférence, ladite composition (II) a un pH d'au moins 7,0, plus préférentiellement d'au moins 7,5, encore plus préférentiellement d'au moins 8,0. De préférence, ladite composition (II) a un pH d'au plus 9,5, plus préférentiellement d'au plus 9,4, plus préférentiellement encore d'au plus 9,3. De préférence, ladite composition (II) a un pH d'au moins 7,0 et d'au plus 9,5, plus préférentiellement d'au moins 7,5 et d'au plus 9,3, encore plus préférentiellement d'au moins 8,0 et d'au plus 9,3.

De préférence, chacune des étapes (i), (ii), (iii) et (iv) peut être réalisée dans un récipient de réaction, comme par exemple mais sans y être limité, une cuve de réaction, un réacteur (par exemple, un réacteur en T), une conduite, une chambre de réaction.

De préférence, toutes les étapes (i), (ii), (iii) et (iv) sont réalisées dans le même récipient de réaction

Ledit récipient de réaction peut comprendre des moyens d'agitation.

### Etape (v) - Séparation

Ledit procédé comprend en outre une étape de séparation dudit précipité d'au moins une partie de ladite solution aqueuse de ladite composition (II) obtenue à l'étape (iv).

En d'autres mots, ladite étape (v) est une étape de séparation liquide/solide permettant de séparer ladite solution aqueuse dudit précipité compris dans ladite composition (II).

Ladite étape (v) peut être réalisée par tout moyen connu de l'homme du métier. De préférence, ladite étape (v) peut comprendre une filtration et/ou une décantation. Ainsi, ladite étape de séparation (v) peut être réalisée en utilisant par exemple un filtre presse, un filtre sous vide, un filtre à bande, un filtre centrifuge, un filtre à pan basculant, un décanteur centrifuge, un hydrocyclone, un décanteur, etc.

Par exemple, ladite solution aqueuse peut être séparée dudit précipité par une filtration sous vide ou sous pression.

De préférence, ladite solution aqueuse de ladite composition (II) séparée à l'étape (v) comprend au moins 0,01 mg/L, plus préférentiellement au moins 0,10 mg/L, encore plus préférentiellement au moins 0,20 mg/L de lithium. De préférence, ladite solution aqueuse de ladite composition (II) séparée à l'étape (v) comprend au plus 3,00 mg/L, plus préférentiellement au plus 2,00 mg/L, encore plus préférentiellement au plus 1,00 mg/L de lithium. De préférence, ladite solution aqueuse de ladite composition (II) séparée à l'étape (v) comprend au moins 0,01 mg/L et au plus 3,00 mg/L, plus préférentiellement au moins 0,10 mg/L et au plus 2,00 mg/L, encore plus préférentiellement au moins 0,20 mg/L et au plus 1,00 mg/L de lithium.

De préférence, ladite solution aqueuse de ladite composition (II) séparée à l'étape (v) comprend au moins 0,01 mg/L, plus préférentiellement au moins 0,05 mg/L, encore plus préférentiellement au moins 0,10 mg/L d'aluminium. De préférence, ladite solution aqueuse de ladite composition (II) séparée à l'étape (v) comprend au plus 10,00 mg/L, de préférence au plus 8,00 dmg/L, plus préférentiellement au plus 6,00 mg/L, encore plus préférentiellement au plus 4,00 mg/L, encore plus préférentiellement au plus 1,50 mg/L, encore plus préférentiellement au plus 1,00 mg/L d'aluminium. De préférence, ladite solution aqueuse de ladite composition (II) séparée à l'étape (v) comprend au moins 0,01 mg/L et au plus 2,00 mg/L, plus préférentiellement au moins 0,05 mg/L et au plus 1,50 mg/L, encore plus préférentiellement au moins 0,10 mg/L et au plus 1,00 mg/L d'aluminium.

Au sens de la présente invention, les quantités d'aluminium sont déterminées par spectrométrie ICP-OES de l'anglais : « Inductively Coupled Plasma Optical Emission Spectroscopy » et représentent des quantités d'atomes d'aluminium.

Au sens de la présente invention, le temps de réaction dudit procédé est défini comme le temps entre le moment où la totalité du composé AI a été ajoutée à l'étape (iii) et le moment où l'étape (v) commence. En d'autres mots, le « temps de réaction » est le temps durant lequel le contenu dudit récipient de réaction est agité.

De préférence, ledit temps de réaction est d'au moins 2 minutes, plus préférentiellement d'au moins 5 minutes, plus préférentiellement d'au moins 10 minutes, plus préférentiellement d'au moins 15 minutes, plus préférentiellement d'au moins 20 minutes, d plus préférentiellement d'au moins 25 minutes. De préférence, ledit temps de réaction est d'au plus 48 heures, plus préférentiellement d'au plus 24 heures, plus préférentiellement encore d'au plus 12 heures, plus préférentiellement d'au plus 5 heures, plus préférentiellement d'au plus 2 heures, plus préférentiellement d'au plus 1 heure, plus préférentiellement d'au plus 45 minutes. De préférence, ledit temps de réaction est d'au moins 15 minutes et d'au plus 60 minutes, plus préférentiellement d'au moins 20 minutes et d'au plus 50 minutes, plus préférentiellement encore d'au moins 25 minutes et d'au plus 45 minutes. Alternativement, le temps de réaction est d'au moins 1 heure et d'au plus 48 heures, plus préférentiellement d'au moins 1 heure et d'au plus 24 heures, plus préférentiellement d'au moins 1 heure et d'au plus 12 heures, encore plus préférentiellement d'au moins 1 heures et d'au plus 5 heures.

De préférence, ledit flux comprend au moins 10,0 g/L et au plus 120,0 g/L de carbonate et le pH dudit flux est ajusté à l'étape (ii) de manière à ce que ledit flux ait un pH d'au moins 7,0 et d'au plus 9,5, et ladite composition (I) présente en outre : un rapport molaire Al/Li d'au moins 2,2 et au plus 10,0 et ladite composition (II) ait un pH d'au moins 7,0 et d'au plus 9,5, plus préférablement d'au moins 7,5 et d'au plus 9,3, encore plus préférablement d'au moins 8,0 et d'au plus 9,3 et ledit composé d'AI est un aluminate de sodium.

De préférence, ledit flux comprend au moins 10,0 g/L et au plus 120,0 g/L de carbonate et le pH dudit flux est ajusté à l'étape (ii) de manière à ce que ledit flux ait un pH d'au moins 7,0 et d'au plus 9,5, et ladite composition (I) présente en outre : un rapport molaire Al/Li d'au moins 2,20 et au plus 10,0 et ladite composition (II) ait un pH d'au moins 7,0 et d'au plus 9,5, plus préférablement d'au moins 7,5 et d'au plus 9,3, encore plus préférablement d'au moins 8,0 et d'au plus 9,3 et ledit composé d'AI est un aluminate de sodium et ledit temps de réaction est d'au moins 15 minutes et d'au plus 60 minutes, plus préférablement d'au moins 20 minutes et d'au plus 50 minutes, voire plus préférablement au moins 25 minutes et au plus 45 minutes.

De préférence, le flux comprend au moins 10,0 g/L et au plus 120,0 g/L de carbonate et ladite composition (I) présente en outre : un rapport molaire Al/Li d'au moins 2,2 et d'au plus 10,0 à condition que ladite le flux fourni à l'étape (i) comprend : moins de 1,0 g/L d'atomes de phosphore, et moins de 0,5 g/L de solide matière ; et ladite composition (II) a un pH d'au moins 7,0 et d'au plus 9,5, plus préférablement d'au moins 7,5 et d'au plus 9,3, encore plus préférablement d'au moins 8,0 et d'au plus 9,3 et ledit composé d'Al est un sulfate d'aluminium.

De préférence, le flux comprend au moins 10,0 g/L et au plus 120,0 g/L de carbonate et ladite composition (I) présente en outre : un rapport molaire Al/Li d'au moins 2,2 et d'au plus 10,0 à condition que ladite le flux fourni à l'étape (i) comprend : moins de 1,0 g/L d'atomes de phosphore, et moins de 0,5 g/L de solide matière ; et ladite composition (II) a un pH d'au moins 7,0 et d'au plus 9,5, plus préférablement d'au moins 7,5 et d'au plus 9,3, encore plus préférablement d'au moins 8,0 et d'au plus 9,3 et ledit composé d'Al est un sulfate d'aluminium et ledit temps de réaction est d'au moins 15 minutes et d'au plus au plus 60 minutes, plus préférentiellement au moins 20 minutes et au plus 50 minutes, encore plus préférablement au moins 25 minutes et au plus 45 minutes.

De préférence, ledit flux comprend au moins 10,0 g/L et au plus 120,0 g/L de carbonate et ladite composition (I) présente en outre : un rapport molaire Al/Li d'au moins 2,05 et d'au plus 10,00 à condition que ledit flux fourni à l'étape (i) comprenne : moins de 1,0 g/L d'atomes de phosphore , et moins de 0,5 g/L de matière solide ; et ladite composition (II) a un pH d'au moins 7,0 et d'au plus 9,5, plus préférablement d'au moins 7,5 et d'au plus 9,3, encore plus préférablement d'au moins 8,0 et d'au plus 9,3 et ledit composé AI est un chlorure d'aluminium,.

De préférence, ledit flux comprend au moins 10,0 g/L et au plus 120,0 g/L de carbonate et ladite composition (I) présente en outre : un rapport molaire AI/Li d'au moins 2,05 et d'au plus 10,00 à condition que ledit flux fourni à l'étape (i) comprenne : moins de 1,0 g/L d'atomes de phosphore , et moins de 0,5 g/L de matière solide ; et ladite composition (II) a un pH d'au moins 7,0 et d'au plus 9,5, plus préférablement d'au moins 7,5 et d'au plus 9,3, encore plus préférablement d'au moins 8,0 et d'au plus 9,3 et ledit composé Al est un chlorure d'aluminium et ledit temps de réaction est d'au moins 15 minutes et d'au plus 60 minutes, plus préférablement d'au moins 20 minutes et d'au plus 50 minutes, encore plus préférablement d'au moins 25 minutes et d'au plus 45 minutes.

De préférence, ledit flux fourni à l'étape (i) comprend au moins 1,0 g/L et au plus 10,0 g/L d'atomes de phosphore, et le pH dudit flux est ajusté à l'étape (ii) de sorte que ledit flux présente un pH d'au moins 7,0 et d'au plus 9,5, et ladite composition (I) a en outre : un rapport molaire Al/Li d'au moins 3,00 et d'au plus 10,00 à condition que ledit flux fourni à l'étape (i) comprenne : moins de 0,5 g/L de matière solide et ladite composition (II) a un pH d'au moins 10,0 et d'au plus 12,0 et ledit composé d'Al est un aluminate de sodium.

De préférence, ledit flux fourni à l'étape (i) comprend au moins 1,0 g/L et au plus 100,0 g/L d'atomes de phosphore, et le pH dudit flux est ajusté à l'étape (ii) de sorte que ledit flux présente un pH d'au moins 7,0 et d'au plus 9,5, et ladite composition (I) a en outre : un rapport molaire Al/Li d'au moins 3,00 et d'au plus 10,00 à condition que ledit flux fourni à l'étape (i) comprenne : moins de 0,5 g/L de matière solide et ladite composition (II) a un pH d'au moins 10,0 et d'au plus 12,0 et ledit composé d'Al est un aluminate de sodium et ledit temps de réaction est d'au moins 1h et d'au plus 5 h.

De préférence, ledit flux fourni à l'étape (i) comprend au moins 1,0 g/L et au plus 10,0 g/L d'atomes de phosphore, et le pH dudit flux est ajusté à l'étape (ii) de sorte que ledit flux présente un pH d'au moins 7,0 et d'au plus 9,5, et ladite composition (I) a en outre : un rapport molaire Al/Li d'au moins 3,00 et d'au plus 10,00 à condition que ledit flux fourni à l'étape (i) comprenne : moins de 0,5 g/L de matière solide et ladite composition (II) a un pH d'au moins 10,0 et d'au plus 12,0 et ledit composé d'Al est un sulfate d'aluminium.

De préférence, ledit flux fourni à l'étape (i) comprend au moins 1,0 g/L et au plus 10,0 g/L d'atomes de phosphore, et le pH dudit flux est ajusté à l'étape (ii) de sorte que ledit flux présente un pH d'au moins 7,0 et d'au plus 9,5, et ladite composition (I) a en outre : un rapport molaire Al/Li d'au moins 3,00 et d'au plus 10,00 à condition que ledit flux fourni à l'étape (i) comprenne : moins de 0,5 g/L de matière solide et ladite composition (II) a un pH d'au moins 10,0 et d'au plus 12,0 et ledit composé d'Al est un sulfate d'aluminium et ledit temps de réaction est d'au moins 1h et d'au plus 50 h.

De préférence, le pH dudit flux est ajusté à l'étape (ii) pour que ledit flux ait un pH d'au moins 8,0 et d'au plus 9,5 et ladite composition (I) a un rapport molaire Al/Li d'au moins 5,00 et d'au plus 50,00 à condition que ledit flux fourni à l'étape (i) comprenne au moins 0,5 g/L de matière solide et ladite composition (II) a un pH d'au moins 7,0 et d'au plus 9,5 et ledit flux comprend au moins 0,5 g/L et au plus 400,0 g/L de matières solides et ledit composé d'Al est un aluminate de sodium.

De préférence, le pH dudit flux est ajusté à l'étape (ii) pour que ledit flux ait un pH d'au moins 8,0 et d'au plus 9,5 et ladite composition (I) a un rapport molaire Al/Li d'au moins 5,00 et d'au plus 50,00 à condition que ledit flux fourni à l'étape (i) comprenne au moins 0,5 g/L de matière solide et ladite composition (II) a un pH d'au moins 7,0 et d'au plus 9,5 et ledit flux comprend au moins 0,5 g/L et au plus 400,0 g/L de matières solides et ledit composé d'Al est un aluminate de sodium et ledit temps de réaction est d'au moins 15 minutes et au plus 5 heures.

De préférence ladite composition (I) utilisée durant au moins une partie ou la totalité de l'étape (iv) peut avoir une température d'au moins 10°C, plus préférentiellement d'au moins 15°C, plus préférentiellement d'au moins 20 °C. De préférence ladite composition (I) utilisée durant au moins une partie ou la totalité de l'étape (iv) peut avoir une température d'au plus 90°C, plus préférentiellement d'au plus 70°C, plus préférentiellement d'au plus 60 °C, plus préférentiellement d'au plus 50 °C, plus préférentiellement d'au plus 40 °C, plus préférentiellement d'au plus 30 °C. De préférence ladite composition (I) utilisée durant au moins une partie ou la totalité de l'étape (iv) peut avoir une température d'au moins 10°C et au plus 90°C, plus préférentiellement d'au moins 15°C et au plus 80 °C, plus préférentiellement d'au moins 15 °C et au plus 70°C, plus préférentiellement d'au moins 15 °C et au plus 60°C, plus préférentiellement d'au moins 15 °C et au plus 50°C, plus préférentiellement d'au moins 15 °C et au plus 40°C.

### EXEMPLES

### FLUX PROVENANT DE PROCEDES DE RECYCLAGE HYDROMETALLURGIQUE DE MATERIAUX DERIVES DE BATTERIES

Dans cet exemple, un flux provenant de procédés de recyclage hydrométallurgique de matériaux dérivés de batteries a été utilisé, en particulier, ce flux a été obtenu par un procédé comprenant au moins les étapes suivantes :
- Génération par voie mécanique et/ou thermique d'un flux de matière issu de la chaine de valeur des batteries Lithium-ion. Ledit flux peut être une black mass, un coproduit du recyclage pyrométallurgique des batteries, un coproduit de la production de batteries, ...
- lixiviation sélective ou non du lithium contenu dans ledit flux de matière de manière à obtenir un lixiviat ; ledit lixiviat comprenant au moins le lithium sous forme de cations.
- précipitation du Li compris dans ledit lixiviat sous forme de Li₂CO₃, et récupération d'un filtrat ; la précipitation sous forme de Li₂CO₃ étant réalisée par ajout de Na₂CO₃ dans le lixiviat.

Le filtrat obtenu après précipitation du Li était en fait un flux directement traité dans le procédé selon la présente invention, c'est-à-dire sans autre traitement préalable.

Ledit flux comprenait au moins :
- 1637,0 mg de Li/L de flux,
- moins de 1,0 g/L d'atomes de phosphore, et
- moins de 0,5 g/L de matière solide, et
- 19,6 g/L de carbonate.

Les quantités de Li, d'atomes de phosphore dans ledit flux ont été déterminées par ICP-OES. La quantité de carbonate dans ledit flux a été déterminée par titrage colorimétrique.

Ledit flux avait initialement un pH de 12,2 et a été fourni dans une cuve de réaction.

Ensuite, du sulfate d'aluminium aqueux ayant une concentration massique de 300,0 g/L a été ajouté en une seul fois dans ladite cuve et mélangé avec ledit flux, de manière à obtenir une composition (I) dont le pH était de 3,5 et le rapport molaire Al/Li de ladite composition (I) était de 2,50.

Le pH de ladite composition (I) a ensuite été modifié de manière à obtenir une composition (II) dont le pH était de 8,3. Une solution de NaOH (solution aqueuse de 300,0 g/L de NaOH) a été ajoutée dans ladite cuve pour atteindre ce pH. Ladite composition (II) comprenait un précipité comprenant au moins des oxydes et hydroxydes d'aluminium et de lithium et une solution aqueuse.

La solution aqueuse (le filtrat) a été récupérée après filtration. Les quantités d'atomes de Li et de AI dans ladite solution aqueuse sont de 1,67 mg/L et 0,26 mg/L respectivement. Durant l'ensemble du procédé, la température dudit flux, de ladite composition (I), et de ladite composition (II) était entre 21 et 32°C. Le temps de réaction tel que défini avant est de 1h.

Les quantités de Li et d'AI dans le filtrat final ont été mesurées par ICP-OES.

### FLUX PROVENANT DE PROCEDES DE RECYCLAGE HYDROMETALLURGIQUE DE MATERIAUX DERIVES DE BATTERIES

Dans cet exemple, un flux provenant de procédés de recyclage hydrométallurgique de matériaux dérivés de batteries a été utilisé, en particulier, ce flux a été obtenu par un procédé comprenant au moins les étapes suivantes :
- Génération par voie mécanique et/ou thermique d'un flux de matière issu de la chaine de valeur des batteries Lithium-ion. Ledit flux peut être une black mass, un coproduit du recyclage pyrométallurgique des batteries, un coproduit de la production de batteries, ...
- lixiviation sélective ou non du lithium contenu dans ledit flux de matière de manière à obtenir un lixiviat ; ledit lixiviat comprenant au moins le lithium sous forme de cations.
- précipitation du Li sous forme de Li₃PO₄, et récupération d'un filtrat. La précipitation du Li sous forme de Li₃PO₄ est réalisée par ajout de H₃PO₄ + NaOH dans le lixiviat.

Le filtrat obtenu après précipitation du Li était en fait un flux directement traité dans le procédé selon la présente invention, c'est-à-dire sans autre traitement préalable.

Ledit flux comprenait :
- 206,0 mg de Li/L de flux, et
- moins de 0,5 g/L de matière solide, et
- 3,5 g/L d'atomes de phosphore.

Les quantités de Li, d'atomes de phosphore dans ledit flux sont déterminées par ICP-OES.

Ledit flux a initialement un pH de 12,7 et était fourni dans une cuve de réaction.

Le pH dudit flux a ensuite été abaissé par ajout d'une solution d'acide sulfurique concentré à 96 % en poids dans ladite cuve de manière que ledit flux ait un pH d'une valeur de 7,0.

Ensuite, une solution aqueuse d'aluminate de sodium contenant 19% en poids d'Al₂O₃ a été ajouté en une seul fois dans ladite cuve et mélangé avec ledit flux, de manière à obtenir une composition (I) dont le pH a une valeur de 11,3 et le rapport molaire Al/Li est de 4,00.

Le pH de ladite composition (I) a ensuite été modifié de manière à obtenir une composition (II) dont le pH a une valeur de 9,3. Une solution d'acide sulfurique concentré à 96 % en poids a été ajoutée dans ladite cuve pour modifier le pH de ladite composition (I) et obtenir une composition (II). Ladite composition (II) comprenait un précipité comprenant au moins des oxydes et hydroxydes d'aluminium et de lithium et une solution aqueuse.

La solution aqueuse a été récupérée après filtration. Les quantités de Li et de Al dans ladite solution aqueuse sont de 0,82 mg/L et 7,3 mg/L respectivement. Durant l'ensemble du procédé, la température dudit flux, de ladite composition (I), et de ladite composition (II) était entre 21 et 32°C. Le temps de réaction tel que défini avant est de 2 heures.

Les quantités de Li et d'AI dans le filtrat final sont mesurées par ICP-OES.

### FLUX PROVENANT DE TRAITEMENT DES MATIERES ISSUES DU FUMING DE DIFFERENTS METAUX EN PARTICULIER LE ZN ET PB

Dans cet exemple, un flux provenant du procédé de lixiviation en milieu basique des halogènes contenu dans des matières issues du fuming du Zn a été utilisé.

Ledit flux comprend :
- 4,63 mg de Li/L de flux, et
- 300,0 g/L de matière solide, et
- 3,0 g/L de carbonate.

Les quantités de Li dans ledit flux sont mesurées par ICP-OES.

Ledit flux a initialement un pH d'une valeur de 11,3 et était fourni dans une cuve de réaction.

Le pH dudit flux a ensuite été abaissé par ajout d'acide sulfurique concentré à 96% de manière que ledit flux ait un pH dont la valeur est de 9,5.

Ensuite, une solution d'aluminate de sodium contenant 19 % en poids d'Al₂O₃ a été ajouté en une seul fois dans ladite cuve de réaction et mélangé avec ledit flux, de manière à obtenir une composition (I) dont le pH est de 11,7 et le rapport molaire Al/Li est de 46,00.

Le pH de ladite composition (I) a ensuite été modifié de manière à obtenir une composition (II) dont le pH est de 9,5. Pour modifier le pH de ladite composition (I), une solution d'acide sulfurique concentré à 96 % en poids a été ajoutée. Ladite composition (II) comprenait un précipité comprenant au moins des oxydes d'aluminium et de lithium et une solution aqueuse.

La solution aqueuse a été récupérée après filtration. Les quantités de Li et de AI dans ladite solution aqueuse sont de 0,13 mg/L et 3,39 mg/L respectivement Durant l'ensemble du procédé, la température dudit flux, de ladite composition (I), et de ladite composition (II) était entre 21 et 32 °C. Le temps de réaction tel que défini avant de 2 heures.

Les quantités de Li et d'AI dans le filtrat final sont mesurées par ICP-OES.

## Revendications

1. Procédé d'abattement du lithium compris dans au moins un flux aqueux dérivé d'au moins un procédé industriel, ledit procédé d'abattement comprenant au moins les étapes suivantes :
(i). fourniture d'au moins un flux aqueux dérivé d'au moins un procédé industriel [ci-après, « flux »] ; ledit flux comprenant au moins 3,1 mg/L et au plus 3000,0 mg/L de lithium ; ledit flux comprenant en outre :
• au moins 1,0 g/L d'atomes de phosphore ; et/ou
• au moins 3,0 g/L de carbonate ; et/ou
• au moins 0,5 g/L de matière solide ;
(ii). optionnellement ajustement du pH dudit flux de manière que ledit flux ait un pH d'au moins 7,0 et d'au plus 9,5 ;
(iii). ajouter au moins un composé à base d'aluminium [ci-après, « composé AI »] audit flux, de manière à obtenir une composition (I) ;
ladite composition (I) ayant en outre :
• soit un rapport molaire Al/Li d'au moins 2,05 à la condition que ledit flux fourni à l'étape (i) comprenne :
∘ moins de 1,0 g/L d'atomes de phosphore ; et
o moins de 0,5 g/L de matière solide ;
• ou un rapport molaire Al/Li d'au moins 3,00 à la condition que ledit flux fourni à l'étape (i) comprenne :
o au moins 1,0 g/L d'atomes de phosphore ; et
o moins de 0,5 g/L de matière solide ;
• ou un rapport molaire Al/Li d'au moins 5,00 à la condition que ledit flux fourni à l'étape (i) comprenne au moins de 0,5 g/L de matière solide ;
(iv). augmenter ou diminuer le pH de ladite composition (I) obtenue à l'étape (iii) de manière à obtenir une composition (II) ayant un pH d'au moins 7,0 et d'au plus 9,5 ; ladite composition (II) comprenant une solution aqueuse et un précipité ; ledit précipité comprenant du lithium et de l'aluminium ;
(v). séparation dudit précipité d'au moins une partie de ladite solution aqueuse de ladite composition (II) obtenue à l'étape (iv).

2. Procédé selon la revendication 1, dans lequel ledit flux est dérivé d'un procédé hydrométallurgique ou dérivé d'un procédé de traitement des eaux usées.

3. Procédé selon la revendication 1 ou la revendication 2, dans lequel ledit composé AI est choisi dans le groupe constitué par un sel alcalin d'aluminate, le sulfate d'aluminium, le chlorure d'aluminium, les polychlorures d'aluminium, les chlorure hydroxyde sulfate de polyaluminium, leurs hydrates, et leurs mélanges.

4. Procédé selon l'une quelconque des revendications précédentes, dans lequel ledit précipité comprend des oxydes et/ou des hydroxydes d'aluminium et/ou de lithium.

5. Procédé selon l'une quelconque des revendications précédentes, dans lequel ladite composition (I) présente un rapport molaire Al/Li d'au moins 2,10, de préférence au moins 2,20, de manière plus préférentielle au moins 2,30, à condition que ledit flux fourni à l'étape (i) comprenne : moins de 1,0 g/L d'atomes de phosphore, et moins de 0,5 g/L de matière solide.

6. Procédé selon l'une quelconque des revendications précédentes, dans lequel ladite composition (I) présente un rapport molaire Al/Li d'au plus 45,00, plus préférentiellement d'au plus 40,00, plus préférentiellement d'au plus 30,00, plus préférentiellement d'au plus 20,00, plus préférentiellement d'au plus 10,00, plus préférentiellement d'au plus 5,00 à condition que ledit flux fourni à l'étape (i) comprenne : moins de 1,0 g/L d'atomes de phosphore, et moins de 0,5 g/L de matière solide.

7. Procédé selon l'une quelconque des revendications précédentes, dans lequel ladite composition (I) présente en outre : un rapport molaire Al/Li d'au moins 3,50, préférentiellement d'au moins 4,00 à condition que ledit flux fourni à l'étape (i) comprenne : au moins 1,0 g/L d'atomes de phosphore, et moins de 0,5 g/L de matière solide.

8. Procédé selon l'une quelconque des revendications précédentes, dans lequel ladite composition (I) présente en outre : un rapport molaire Al/Li d'au plus 45,00, préférentiellement d'au plus 40,00 à condition que ledit flux fourni à l'étape (i) comprenne : au moins 1,0 g/L d'atomes de phosphore, et moins de 0,5 g/L de matière solide.

9. Procédé selon l'une quelconque des revendications précédentes, dans lequel ladite composition (I) présente un rapport molaire Al/Li d'au moins 5,00, plus préférentiellement d'au moins 7,50, encore plus préférentiellement d'au moins 10,00, encore plus préférentiellement d'au moins 15,00 à condition que ledit flux fourni à l'étape (i) comprenne au moins 0,5 g/L de matière solide.

10. Procédé selon l'une quelconque des revendications précédentes, dans lequel, ladite composition (I) présente un rapport molaire Al/Li d'au plus 50,00, de préférence d'au plus 40,00, plus préférentiellement encore d'au plus 30,00, à condition que ledit flux fourni à l'étape (i) comprenne au moins 0,5 g/L de matière solide.

11. Procédé selon l'une quelconque des revendications précédentes, dans lequel, dans l'étape (iv) le pH dudit flux est ajusté de manière que ledit flux ait un pH d'au plus 9,4, de préférence encore d'au plus 9,3, encore plus préférentiellement d'au plus 8,8.

12. Procédé selon l'une quelconque des revendications précédentes, dans lequel, dans l'étape (iv) le pH dudit flux est ajusté de manière que ledit flux ait un pH d'au moins 7,5 et d'au plus 9,5, de préférence d'au moins 7,5 et d'au plus 9,3, plus préférentiellement encore d'au moins 8,0 et d'au plus 9,3, encore plus préférentiellement d'au moins 8,0 et d'au plus 8,8.

13. Procédé selon l'une quelconque des revendications précédentes, dans lequel, ladite solution aqueuse de ladite composition (II) séparée à l'étape (v) comprend au moins 0,01 mg/L, plus préférentiellement au moins 0,10 mg/L, encore plus préférentiellement au moins 0,20 mg/L de lithium.

14. Procédé selon l'une quelconque des revendications précédentes, dans lequel, ladite solution aqueuse de ladite composition (II) séparée à l'étape (v) comprend au plus 3,00 mg/L, plus préférentiellement au plus 2,00 mg/L, encore plus préférentiellement au plus 1,00 mg/L de lithium.

15. Procédé selon l'une quelconque des revendications précédentes, dans lequel, ladite solution aqueuse de ladite composition (II) séparée à l'étape (v) comprend au plus 10,00 mg/L, de préférence au plus 8,00 mg/L, plus préférentiellement au plus 6,00 mg/L, encore plus préférentiellement au plus 4,00 mg/L, encore plus préférentiellement au plus 1,50 mg/L, encore plus préférentiellement au plus 1,00 mg/L d'aluminium.
